# EUROPÄISCHE PATENTANMELDUNG

(11) **EP 0 990 831 A1**
(43) Veröffentlichungstag der Anmeldung: **05.04.2000**
(21) Anmeldenummer: 99118835.0
(22) Anmeldetag: 24.09.1999
(51) Int. Cl.: F16L 37/084

(54) **Lösbare Steckverbindung für Hochdruckleitungen**

(30) Priorität: 29.09.1998 DE 19844583
(71) Anmelder: A. Raymond & Cie, F-38028 Grenoble-Cédex (FR)
(72) Erfinder: Raymond, Albert, 38170 Seyssinet (FR); Moretti, Erminio, 38000 Grenoble (FR)
(74) Vertreter: Kirchgaesser, Johannes, Dipl.-Ing.

(57) **Zusammenfassung**

Die lösbare Steckverbindung ist für Hochdruckleitungen, insbesondere für Bremsleitungen im Kraftfahrzeugbau, bestimmt. Sie besteht aus einem zylindrischen Aufnahmegehäuse (1) mit einem zentralen Aufnahmeraum (2) zur Aufnahme eines rohrförmigen Einsteckteils (3), das mit einer Halterippe (4) versehen ist, sowie mehreren, paarweise gegenüberliegenden Verriegelungselementen ( 12 ) mit in den Aufnahmeraum (2) hineinragenden Rastkeilen (15), welche durch eine die Verriegelungselemente (12) ringförmig umgreifende, separate Haltefeder (21) in Richtung des Aufnahmeraumes (2) vorgespannt sind. Die Rastkeile (15) werden beim Einführen des Einsteckteils (3) von dessen Halterippe (4) gegen die Federkraft der Haltefeder (21) auseinandergedrückt und federn nach vollständigem Eindringen des Einsteckteils (3) in den Aufnahmeraum (2) wieder zusammen, wobei die radial ausgerichteten Rastflächen (17) der Rastkeile (15) die Halterippe (4) auf deren Rückseite formschlüssig hintergreifen.

Die Verriegelungselemente (12) weisen dabei auf der Außenseite jeweils eine Auflagefläche (20) zur radialen Auflage der Haltefeder (21) auf und sind mit seitlich abstehenden Schultern (19) versehen, welche sich auf dem Rand (30) der Aussparung (11) abstützen, sobald der Rastkeil (15) seine für die Rastfunktion erforderliche Eindringtiefe erreicht hat. Hierdurch lassen sich massiv ausgebildete Verriegelungselemente (21) sehr einfach in die zugehörigen Aussparungen (11) einsetzen und durch das anschließende Auflegen der Haltefeder (21) in der Verriegelungsposition halten.

## Beschreibung

Die Erfindung geht aus von der im Oberbegriff des Anspruchs 1 beschriebenen lösbaren Steckverbindung, welche beispielsweise aus **EP 0 719 971 A1** bekannt ist.

Derartige Steckverbindungen sind für Hochdruckleitungen, insbesondere für Bremsleitungen im Kraftfahrzeugbau, bestimmt. Sie bestehen üblicherweise aus einem zylindrischen Aufnahmegehäuse mit einem zentralen Aufnahmeraum zur Aufnahme eines rohrförmigen Einsteckteils, das mit einer umlaufenden Halterippe versehen ist sowie aus mehreren paarweise gegenüberlliegenden Verriegelungselementen mit Rastkeilen, welche in den Aufnahmeraum hineinragen. Die Verriegelungselemente sind in den Aussparungen gleitend geführt und durch eine separate Haltefeder aus Federstahl in Richtung des Aufnahmeraums vorgespannt, so daß die Rastkeile beim Einführen des Einsteckteils von dessen Halterippe gegen die Federkraft auseinandergedrückt werden und nach vollständigem Eindringen des Einsteckteils in den Aufnahmeraum die Halterippe auf deren Rückseite hintergreifen. Die Verriegelungselemente und das Federelement sind hierbei einstückig aus zähelastischem Kunststoff oder aber aus Federstahl hergestellt. Nach einem älteren Stand der Technik kann die Haltefeder auch separat um die Verriegelungselemente herumgeführt und mit diesen durch Schrauben verbunden sein.

Zum Lösen der Steckverbindung sind die Rastkeile seitlich, d.h. in Richtung auf den achsparallelen Seitenrand der Aussparung derart abgeschrägt, daß die Rastkeile beim Drehen der Verriegelungselemente um die Rohrachse über den Seitenrand nach außen gleiten, bis die Rastkeile außer Eingriff sind und das Einsteckteil frei herausgezogen werden kann.

Durch die Verwendung von zähelastischem Kunststoff ergibt sich jedoch eine für Hochdruck zu geringe Haltekraft, während durch die alternative Verwendung einer Keilfeder aus Federstahl die Gefahr besteht, daß sich die Seitenkanten der metallischen Rastkeile in die Wandung der Aussparungen einbeißen und diese dadurch beschädigt werden. Außerdem ist diese Kombination von Haltefeder und angeformten Rastkeilen teuer in der Herstellung und schwierig zu montieren.

Aufgabe der Erfindung ist es, die vorgenannte Steckverbindung so zu gestalten, daß bei kostengünstiger Herstellung der Aufnahmegehäuse und erleichterter Montage der Verriegelungselemente die für Hochdruckleitungen erforderliche Haltekraft sichergestellt und die Demontierbarkeit gleichzeitig vereinfacht wird.

Dies wird nach der vorliegenden Erfindung dadurch erreicht, daß die Verriegelungselemente auf der Außenseite jeweils eine Auflagefläche zur radialen Auflage der Haltefeder aufweisen und mit seitlich abstehenden Schultern versehen sind, welche sich auf dem Rand der Aussparung abstützen, sobald der Rastkeil seine für die Rastfunktion erforderliche Eindringtiefe erreicht hat.

Hierdurch lassen sich die Verriegelungselemente losgelöst von der Haltefeder einfach in die Aussparungen einführen und anschließend durch Auflegen der Haltefeder wirkungsvoll in ihrer Rastposition festlegen, wobei durch die seitliche Schultern und deren Abstützung auf den Rändern der Aussparungen ein genau definiertes beziehungsweise begrenztes Eindringen der Rastkeile in den Aufnahmeraum erreicht wird. Das erfindungsgemäße Aufnahmegehäuse ist damit nicht nur montage- und bedienungsfreundlich ausgebildet, sondern gleichzeitig auch noch hohen Abzugskräften gewachsen und damit den bekannten Aufnahmegehäusen mit den unterschiedlichen Verbindungensarten zwischen Verriegelungselementen und Haltefedem funktionell deutlich überlegen.

Weitere Ausgestaltungen und Merkmale der Erfindung sind in den Unteransprüchen enthalten und sollen nachfolgend anhand von zwei in der Zeichnung dargestellten Ausführungsbeispielen näher erläutert werden. Es zeigt:
- **Fig. 1**: das Aufnahmegehäuse einer ersten Ausführungsform der Steckverbindung im Längsschnitt gemäß Linie I-I in Figur 2,
- **Fig. 2**: einen Querschnitt durch die Aussparungen des Aufnahmegehäuses gemäß Linie II-II in Fig.1,
- **Fig. 3**: ein Verriegelungselement im Schnitt gemäß Linie III-III in Fig.4,
- **Fig. 4**: das gleiche Verriegelungselement in Vorderansicht,
- **Fig. 5**: eine Haltefeder in Seitenansicht,
- **Fig. 6**: ein mit Verriegelungselementen und Haltefeder zusammengebautes Aufnahmegehäuse im Längsschnitt wie in Fig.1,
- **Fig. 7**: das gleiche Aufnahmegehäuse im Querschnitt gemäß Linie VII - VII in Fig. 6,
- **Fig. 8**: das Aufnahmegehäuse beim Einführen des Einsteckteils in den Aufnahmeraum,
- **Fig. 9**: das gleiche Aufnahmegehäuse beim Auseinanderdrücken der Verriegelungselemente durch weiteres Einführen des Einsteckteils,
- **Fig. 10**: das Aufnahmegehäuse mit vollständig eingeführtem Einsteckteil nach dem Einrasten der Verriegelungselemente,
- **Fig. 11**: einen Demontagering in geöffneter Fertigungslage in Vorderansicht,
- **Fig. 12**: den gleichen Demontagering in zusammengeklapptem Zustand in Vorderansicht,
- **Fig. 13**: den geöffneten Demontagering in Draufsicht beim Anlegen an das aus dem Aufnahmeraum vorstehende Ende des Einsteckteils,
- **Fig. 14**: den zusammengeklappten Demontagering beim Einführen in den Aufnahmeraum,
- **Fig. 15**: das gleiche Bild mit zwischen die Rastkeile eingeschobenem Demontagering und
- **Fig. 16**: das gleiche Bild beim Abziehen des ausgerasteten Einsteckteils zusammen mit dem Demontagering.
- **Fig. 17**: das Verriegelungselement einer zweigeteilten Ausführungsform des erfindungsgemäßen Aufnahmegehäuses in Seitenansicht,
- **Fig. 18**: das gleiche Verriegelungselement in Draufsicht,
- **Fig. 19**: das gleiche Verriegelungselement in Vorderansicht,
- **Fig. 20**: der Kopf des zweigeteilten Aufnahmegehäuses beim Einsetzen eines Verriegelungselements im Schnitt gemäß Linie XX ― XX in Figur 21,
- **Fig. 21**: das gleiche Bild im Querschnitt gemäß Linie XXI ― XXI in Figur 20,
- **Fig. 22**: das zusammengesetzte Aufnahmegehäuse mit eingesetztem Verriegelungselement im Längsschnitt beim Aufschieben der Haltefeder,
- **Fig. 23**: das fertig montierte Aufnahmegehäuse mit zum Einführen bereitem Einsteckteil,
- **Fig. 24**: das gleiche Aufnahmegehäuse mit halb eingeführtem Einsteckteil beim Auseinanderdrücken der Verriegelungselemente und
- **Fig. 25**: das gleiche Aufnahmegehäuse mit vollständig eingeführtem Einsteckteil nach dem Einrasten der Verriegelungselemente.

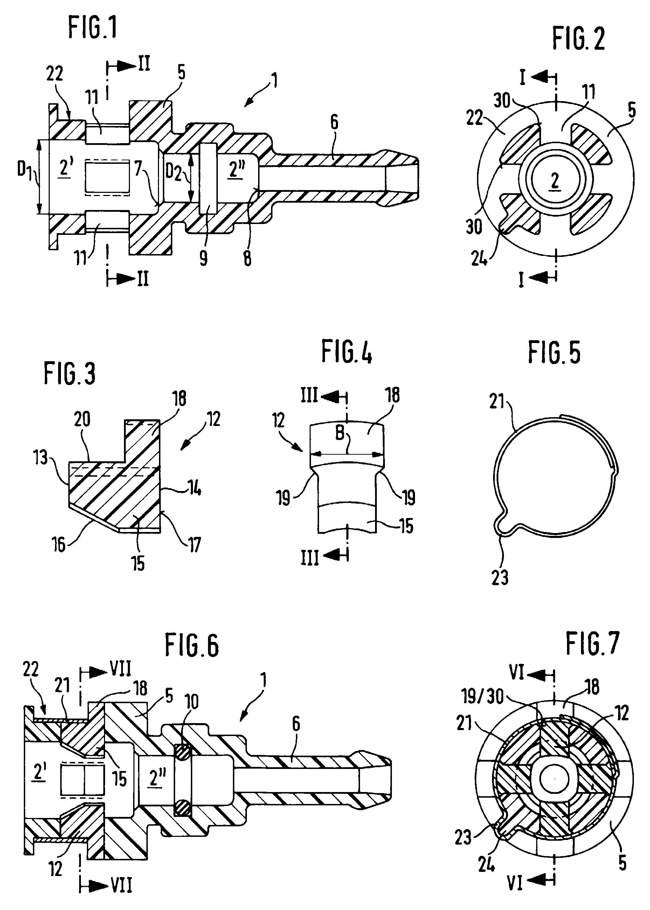

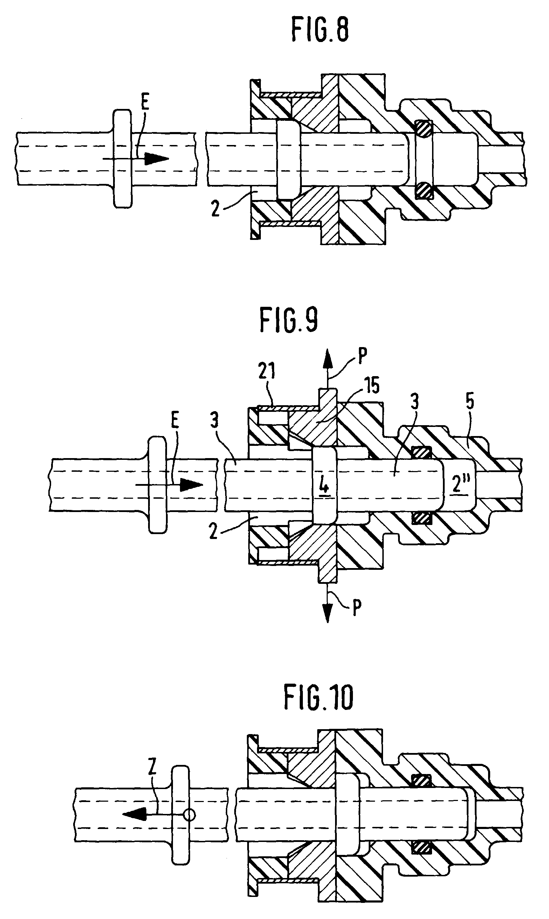

Die in den Figuren 1 bis 10 dargestellte Steckverbindung besteht aus einem zylindrischen Aufnahmegehäuse **1** mit einem in mehreren Stufen abgesetzten, zentralen Aufnahmeraum **2** und einem rohrförmigen Einsteckteil **3** mit einer kurz vor dessen Ende ausgeformten Halterippe **4** (vgl. **Figuren 8 bis 10**).

Das Einsteckteil **3** kann hierbei sowohl das Ende eines stabilen Metallrohres sein, welches beispielsweise für Bremsleitungen verwendet wird. Es kann aber auch aus hartem Kunststoff oder anderem gängigen Spritzgußmaterial bestehen, welches in bekannter Weise mit einer Schlauch- oder Rohrleitung verbindbar ist.

Der Aufnahmeraum **2** ist von einer zylindrischen Gehäusewand **5** umgeben, an deren hinterem Ende ein rohrförmiger Stutzen **6** zum Anschluß an eine nicht dargestellte Hochdruckleitung angeformt ist. Der Aufnahmeraum **2** weist in seinem vorderen, einführseitigen Bereich **2'** einen dem Außendurchmesser der Halterippe **4** entsprechenden Innendurchmesser **D1** auf Dieser vordere Bereich **2'** endet mit einer radial abgesetzten Anschlagfläche **7**. Dem folgt ein mittlerer Bereich **2''** mit einem dem Außendurchmesser des Einsteckteils **3** entsprechenden Innendurchmesser **D2**, wobei dieser Bereich **2''** am Übergang zum Anschlußstutzen **6** mit einer radial abgesetzten Anschlagfläche **8** abschließt. Etwa in der Mitte des mittleren Aufnahmebereichs **2''** befindet sich eine umlaufende Rille **9** zur Einbettung eines Dichtrings **10** zum Abdichten des Einsteckteils **3** gegenüber der Gehäusewand **5**.

Im vorderen Bereich **2'** des Aufnahmegehäuses **1** befinden sich in der Gehäusewand **5** vier diametral gegenüberliegende, im Querschnitt etwa rechteckige Aussparungen **11,** welche zur Aufnahme der in den **Figuren 3 und 4** dargestellten Verriegelungselemente **12** dienen. Diese sind vorzugsweise aus hartem Material wie zum Beispiel Kunststoff oder Aluminium hergestellt und besitzen - in Einsteckrichtung gesehen - eine vordere Gleitfläche **13** und eine rückwärtige Gleitfläche **14**, welche zur gleitenden Führung in den Aussparungen **11** bestimmt sind. Die Verriegelungselemente **12** sind auf der in den Aufnahmeraum **2** hineinragenden Tiefe als Rastkeil **15** ausgebildet, der - in Einsteckrichtung gesehen - auf seiner Vorderseite eine nach innen abgeschrägte Einführfläche **16** und auf seiner Rückseite eine radial ausgerichtete Rastfläche **17** aufweist. Diese liegt beim vorliegenden Ausführungsbeispiel mit der Gleitfläche **14** in der gleichen Ebene; sie kann aber ebenso auch auf einer in Achsrichtung versetzten Ebene liegen.

Auf der Außenseite des Verriegelungselementes **12** ist im - in Einsteckrichtung gesehen - hinteren Bereich ein sich radial nach außen erstreckender Ansatz **18** vorgesehen, welcher aus der Aussparung **11** hervorsteht. Dieser Ansatz **18** hat eine größere Breite **B** als der in die Aussparung 11 hineinragende Teil des Verriegelungselements **12** und ist mit seitlich abstehenden Schultern **19** versehen, welche sich auf dem Gehäuserand **30** der Aussparung **11** abstützen, sobald der Rastkeil **15** seine für die Rastfunktion erforderliche Eindringtiefe erreicht hat (**Figuren 6 und 7**).

Die Verriegelungselemente **12** werden in ihrem vorderen Bereich auf einer Auflagefläche **20** durch eine ringförmige Haltefeder **21** derart in Vorspannung gehalten, daß die Ansätze **18** mit ihren Schultern **19** im einsatzbereiten Zustand auf dem Rand **30** der Aussparung **11** aufliegen. Die Gehäusewand **5** besitzt in ihrem vorderen Bereich eine umlaufende Rille **22**, in welcher die auf der Auflagefläche **20** des Verriegelungselements **12** anliegende Haltefeder **21** eingebettet ist. Die Haltefeder **21** wird einstückig aus Federstahl hergestellt und besitzt vorzugsweise die in **Figur 5** dargestellte Ringform. Sie kann aber auch in anderen geeigneten Ausführungen geformt sein.

Die Haltefeder **21** ist zweckmäßigerweise mit einer radial nach außen abstehenden Lasche **23** versehen, welche auf einem an der Gehäusewand **5** zwischen zwei Aussparungen **11** radial abstehenden Haltefinger **24** aufgesteckt und dadurch verdrehsicher gehalten wird (**Figur 7**).

Die Wirkungsweise der Steckverbindung ist in den **Figuren 8 bis 10** anschaulich dargestellt. **Figur 8** zeigt die erste Stufe beim Einführen des Einsteckteils 3 in Richtung des Pfeiles **"E".** Beim weiteren Eindringen des Einsteckteils in den hinteren Aufnahmebereich **2''** werden, wie aus **Figur 9** ersichtlich, die Rastkeile **15** der Verriegelungselemente **12** durch die Halterippe **4** gegen den elastischen Widerstand der Haltefeder **21** in Richtung der Pfeile **"P"** auseinandergedrückt, so daß die Halterippe **4** zwischen den Rastkeilen **15** hindurchgleiten kann. Sobald die Halterippe **4** nach vollständigem Eindringen des Einsteckteils **3** an der vorderen Anschlagfläche **7** anstößt, federn die Rastkeile **15** wieder in ihre Ausgangslage zurück, wobei sie die Halterippe **4** auf ihrer Rückseite mit der Rastfläche **17** formschlüssig hintergreifen.

Aufgrund der massiven Ausbildung der Verriegelungselemente, deren Herstellung aus hartem Material und der vollflächigen Anlage der vorderen Gleitflächen **13** an der Innenwand der Aussparung **11** ist gewährleistet, daß die Steckverbindung den bei Hochdruckleitungen auftretenden Zugkräften **"Z"** widersteht und sicher verbunden bleibt.

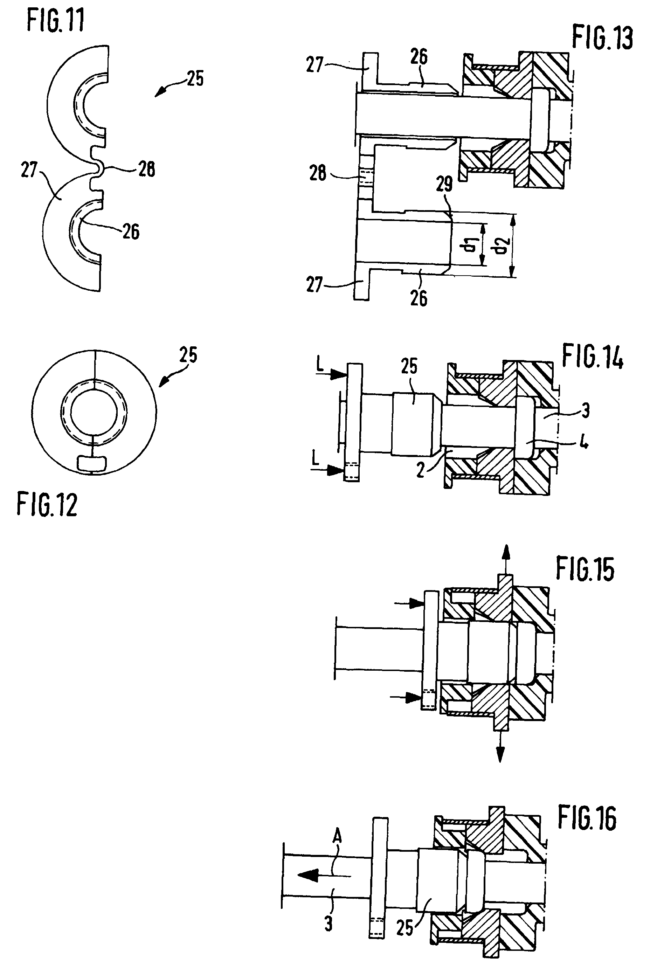

Zum Lösen der Steckverbindung kann beispielsweise der in den **Figuren 11 bis 13** abgebildete Demontagering **25** verwendet werden. Dieser besteht aus zwei Halbschalen **26,** die einerends jeweils mit Halbflanschen **27** versehen sind, welche wiederum durch ein Filmscharnier **28** miteinander verbunden sind. Im zusammengeklappten Zustand gemäß **Figur 12** entspricht der Innendurchmesser **d1** dem Außendurchmesser des Einsteckteils **3**, während der Außendurchmesser **d2** dem Außendurchmesser der Halterippe **4** entspricht. Die Halbschalen **26** weisen ferner an ihrer Einführseite eine konisch zusammenlaufende Schrägfläche **29** auf.

Nachdem der Demontagering **25** außerhalb des Aufnahmegehäuses **1** auf das freie Ende des Einsteckteils **3** aufgesteckt (**Figur 13**) und zusammengeklappt ist, wird er in Richtung der Pfeile **L** in den Aufnahmeraum **2** eingeführt (**Figur 14**) und zwischen die Rastkeile **15** bis zur Anlage an die Halterippe **4** vorgeschoben (**Figur 15**). Sodann kann das Einsteckteil **3** gemäß Darstellung in **Figur 16** zwischen den auseinandergedrückten Rastkeilen **15** aus dem Aufnahmeraum **2** in Richtung des Pfeiles **"A"** herausgezogen werden.

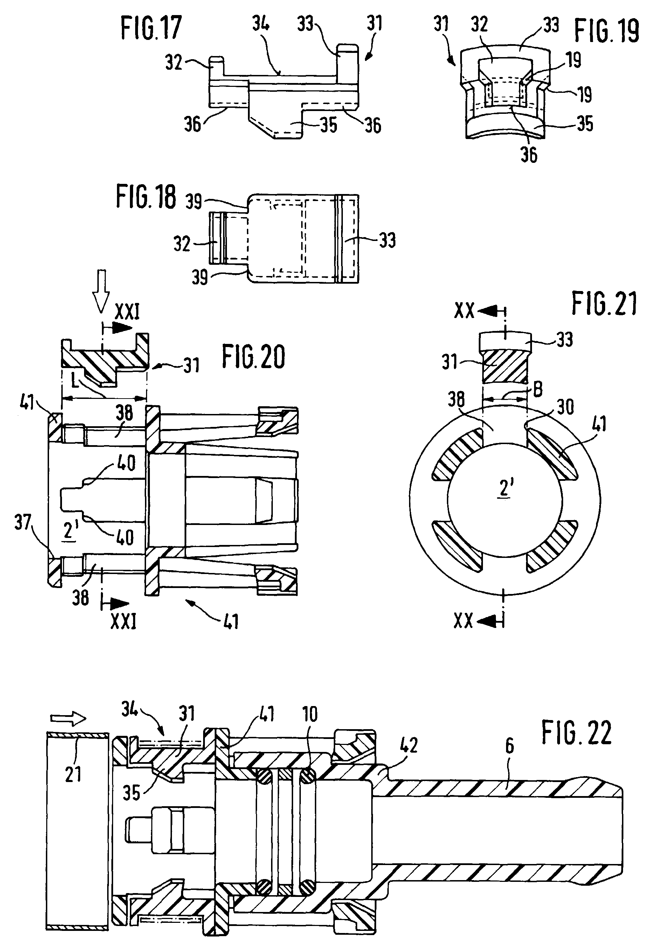

Bei der in den Figuren **17** bis **25** dargestellten Ausführungsform der Erfindung weisen die Verriegelungselemente **31** außenseitig ― in Einsteckrichtung gesehen ― am vorderen und hinteren Ende je einen sich radial nach außen erstreckenden Ansatz **32** und **33** auf, welche eine Vertiefung **34** zum Einbetten der Haltefeder **21** bilden.

Auf der zum Aufnahmeraum **2** weisenden Innenseite der Verriegelungselemente **31** ist etwa in der Mitte ein Rastkeil **35** angeformt, welcher die gleiche Form wie der Rastkeil **15** der Verriegelungselemente **12** besitzt. Die Innenwände **36** vor und hinter dem Rastkeil **35** sind dem Außendurchmesser der Halterippe **4** angepaßt und schließen daher im eingebauten Zustand der Verriegelungselemente **31** mit der Innenwand **37** des vorderen Aufnahmeraumes **2'** bündig ab.

Das Aufnahmegehäuse ist beim vorliegenden Ausführungsbeispiel zweigeteilt und besteht aus einem Aufnahmekopf **41**, welcher die Verriegelungselemente **31** samt Haltefeder **21** aufnimmt, und einem mit diesem in bekannte Weise unter Einschluß von Dichtringen **10** verbindbaren Grundkörper **42,** welcher an seinem hinteren Ende in einen Anschlußstützen **6** übergeht. Der Aufnahmekopf **41** besitzt ebenfalls vier diametral gegenüberliegende Aussparungen **38**, welche in Länge **L** und Breite **B** den Verriegelungselementen **31** angepaßt sind.

Die Verriegelungselemente **31** sind, wie aus Figur 21 erkennbar, im unteren Bereich etwas schmaler als die Ansätze **32** und **33** ausgebildet und weisen an dieser Stelle ebenfalls längsverlaufende Schultern **19** auf, welche sich beim Einsetzen der Verriegelungselemente **31** in die Aussparungen **38** auf dem Rand **30** abstützen, so daß die Verriegelungselemente **31** nicht tiefer in den Aufnahmeraum **2'** eintauchen können.

Die Verriegelungselemente **31** weisen ferner an ihrem vorderen Ende im Bereich vor dem Rastkeil **35** beidseitig nach innen abgesetzte Gleitflächen **39** auf und die zugehörigen Aussparungen **38** sind im vorderen Bereich in gleichem Maße nach innen abgesetzt. Die sich daraus ergebenden Querflächen **40** dienen den Gleitflächen **39** der Verriegelungselementen **31** als Anlage und Führungsfläche.

Figur 22 zeigt das aus Kopf **41** und Grundkörper **42** zusammengebaute Aufnahmegehäuse mit den vier eingesetzten Verriegelungselementen **31**, welche mit ihren Schultern **19** auf den Rändern **30** der Aussparungen **38** aufliegen. Vor dem Aufnahmekopf **41** befindet sich die Haltefeder **21**, welche zum Aufschieben auf den Kopf **41** so weit auseinandergedrückt ist, daß diese über den vorderen Ansatz **32** bis über die Vertiefung **34** vorgeschoben werden kann. Damit die Haltefeder nicht über den hinteren Ansatz **33** hinaustreten kann, ist dieser so ausgebildet, daß er den vorderen Ansatz **32** um mindestens die Dicke der Haltefeder überragt. Dies trägt zweifellos zur Erleichterung des Zusammenbaues bei.

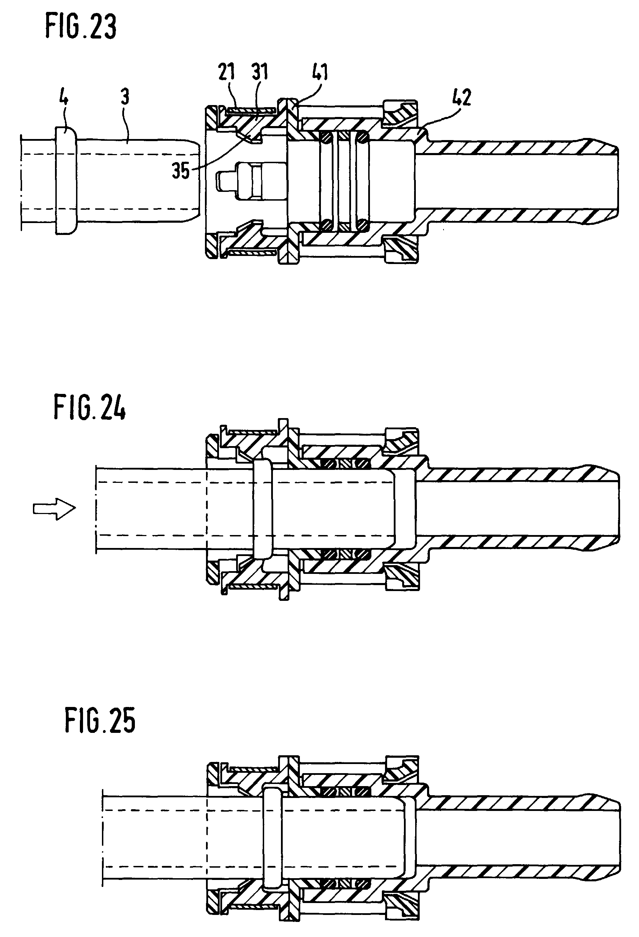

In den **Figuren 23 bis 25** ist die Wirkungsweise der zweiten Ausführungsform anschaulich dargestellt. **Figur 23** zeigt das Einsteckteil **3** vor dem Einführen in das aus Aufnahmekopf **41** und Grundkörper **42** zusammengesetzte Aufnahmegehäuse. Bei **Figur 24** ist das Einsteckteil **3** so weit eingeführt, daß die Verriegelungselemente **31** von der Halterippe **4** gegen die Federkraft der Haltefeder **21** auseinandergedrückt sind, so daß das Einsteckteil **3** weiter eingeführt wereden kann. Bei **Figur 25** ist das Einsteckteil **3** vollständig eingeführt, so daß die Verriegelungselemente **31** wieder in ihre Ausgangslage zusammenfedern können.

Die Rastkeile **35** hintergreifen dabei die Halterippe **4** und verhindern damit, daß das Einsteckteil unbeabsichtigt heraustreten oder gewaltsam herausgezogen werden kann. Hierbei wirkt es sich besonders vorteilhaft aus, daß die Verriegelungselemente **31** unmittelbar vor den Rastkeilen **35** mit ihren Gleitflächen **39** auf den Querflächen **40** der Aussparung **38** abgestützt sind, wodurch die Verriegelungselemente **31** in der Aussparung **38** verkantungssicher gehalten werden.

### Bezugszeichenliste

- 1: Aufnahmegehäuse
- 2: Aufnahmeraum
- 3: Einsteckteil
- 4: Halterippe
- 5: Gehäusewand
- 6: Anschlußstutzen
- 7: vordere Anschlagfläche
- 8: hintere Anschlagfläche
- 9: umlaufende Rille
- 10: Dichtring
- 11: Aussparungen
- 12: Verriegelungselemente
- 13: vordere Gleitfläche
- 14: rückwärtige Gleitfläche
- 15: Rastkeil
- 16: Einführfläche
- 17: Rastfläche
- 18: Ansatz
- 19: Schultern
- 20: Auflagefläche
- 21: Haltefeder
- 22: Rille
- 23: Lasche
- 24: Haltefinger
- 25: Demontagering
- 26: Halbschalen
- 27: Halbflansch
- 28: Filmscharnier
- 29: Schrägfläche
- 30: Rand
- 31: Verriegelungselemente
- 32: Vorderer Ansatz
- 33: Hinterer Ansatz
- 34: Vertiefung
- 35: Rastkeil
- 36: Innenwand von 31
- 37: Innenwand von Aufnahmeraum
- 38: Aussparung
- 39: Gleitflächen
- 40: Querflächen
- 41: Aufnahmekopf
- 42: Grundkörper

## Patentansprüche

1. **Lösbare Steckverbindung** für Hochdruckleitungen, insbesondere für Bremsleitungen im Kraftfahrzeugbau, bestehend aus einem zylindrischen Aufnahmegehäuse (1) mit einem zentralen Aufnahmeraum (2) zur Aufnahme eines rohrförmigen Einsteckteils (3), das mit einer umlaufenden Halterippe (4) versehen ist, sowie mehreren, paarweise gegenüberliegenden Verriegelungselementen (12) mit Rastkeilen (15) , welche in den Aufnahmeraum (2) hineinragen und welche durch eine die Verriegelungselemente (12) ringförmig umgreifende separate Haltefeder (21) aus Federstahl in Richtung des Aufnahmeraums (2) vorgespannt sind, wobei die Verriegelungselemente (12) aus hartem Spritzgußmaterial geformt sind und in Aussparungen (11) in der Außenwand (5) des Aufnahmegehäuses (1) radial geführt sind und ferner radial ausgerichtete Rastflächen (17) aufweisen, welche die ebenfalls radial ausgerichtete Halterippe (4) nach dem Einführen des Einsteckteils (3) formschlüssig hintergreifen, **dadurch gekennzeichnet,** daß die Verriegelungselemente (12) auf der Außenseite jeweils eine Auflagefläche (20) zur radialen Auflage der Haltefeder (21) aufweisen und mit seitlich abstehenden Schultern (19) versehen sind, welche sich auf dem Rand (30) der Aussparung (11) abstützen, sobald der Rastkeil (5) seine für die Rastfunktion erforderliche Eindringtiefe erreicht hat.

2. **Lösbare Steckverbindung** nach Anspruch 1, **dadurch gekennzeichnet**, daß die Verriegelungselemente (12) außenseitig an dem - in Einsteckrichtung gesehen - rückwärtigen Ende einen sich radial erstreckenden Ansatz (18) aufweisen und die Haltefeder (21) im eingebauten Zustand teilweise in einer umlaufenden Rille (22) der Gehäusewand (5) und teilweise auf einer ― in Einsteckrichtung gesehen - vor dem radialen Ansatz (18) befindlichen Auflagefläche (20) der Verriegelungselemente (12) aufliegt, wobei die radialen Ansätze (18) hinter der Haltefeder (21) aus der Aussparung (11) hervorragen.

3. **Lösbare Steckverbindung** nach Anspruch 1 oder 2, dadurch gekennzeichnet, daß die Haltefeder (21) mit einer radial nach außen abstehenden Lasche (23) versehen ist, welche auf einen an der Gehäusewand (5) radial abstehenden Finger (24) verdrehsicher aufsteckbar ist.

4. **Lösbare Steckverbindung** nach Anspruch 1, dadurch gekennzeichnet, daß die Verriegelungselemente (31) außenseitig - in Einsteckrichtung gesehen ― am vorderen und hinteren Ende je einen sich radial nach außen erstreckenden Ansatz (32) und (33) aufweisen, welche eine Vertiefung (34) zum Einbetten der die Verriegelungselemente (31) umgreifenden Haltefeder (21) bilden und auf ihrer Innenseite beiderseits der Rastkeile (35) eine dem Außendurchmesser der Halterippe (4) angepaßte Innenwand (36) besitzen, welche im eingebauten Zustand der Verriegelungselemente (31) mit der Innenwand (37) des vorderen Aufnahmeraums (2') bündig abschließt.

5. **Lösbare Steckverbindung** nach Anspruch 4, dadurch gekennzeichnet, daß die Verriegelungselemente (31) an ihrem vorderen Ende im Bereich vor dem Rastkeil (35) beidseitig nach innen abgesetzte Gleitflächen (39) aufweisen und die zugehörigen Aussparungen (38) im vorderen Bereich in gleiche Maße nach innen abgesetzt sind, wobei die sich daraus ergebenden Querflächen (40) den Gleitflächen (39) der Verriegelungselemente ( 31) als Anlage dienen.

6. **Lösbare Steckverbindung** nach Anspruch 4 oder 5, dadurch gekennzeichnet, daß die hinteren Ansätze (33) die vorderen Ansätze (32) um mindestens die Dicke der Haltefeder (21) überragen.

7. **Lösbare Steckverbindung** nach einem der vorhergehenden Ansprüche 1 bis 6, dadurch gekennzeichnet, daß zum Lösen ein aus zwei Halbschalen (26) bestehender Demontagering (25) vorgesehen ist, bei dem die Halbschalen (26) einerends jeweils mit einem Halbflansch (27) versehen sind, welche wiederum durch ein Filmscharnier (28) miteinander verbunden sind, wobei der Innendurchmesser d1 der Halbschalen (26) dem Außendurchmesser des Einsteckteils (3) und der Außendurchmesser d2 der Halbschalen (26) dem Außendurchmesser der Halterippe (4) entsprechen und die Halbschalen (26) an der Einführseite eine der Einführfläche (16) der Rastkeile (15) entsprechende, konisch zusammenlaufende Schrägfläche (29) aufweisen.
